(19) Europäisches Patentamt
European Patent Office
Office européen des brevets

(11) **EP 1 706 196 B1**

(12) **EUROPÄISCHE PATENTSCHRIFT**

(45) Veröffentlichungstag und Bekanntmachung des Hinweises auf die Patenterteilung:
**05.12.2007 Patentblatt 2007/49**

(51) Int Cl.:
***B01D 69/10*** *(2006.01)*     ***B01D 69/12*** *(2006.01)*
***B01D 71/02*** *(2006.01)*

(21) Anmeldenummer: **05700883.1**

(22) Anmeldetag: **13.01.2005**

(86) Internationale Anmeldenummer:
**PCT/EP2005/000270**

(87) Internationale Veröffentlichungsnummer:
**WO 2005/068056 (28.07.2005 Gazette 2005/30)**

(54) **VERFAHREN ZUR HERSTELLUNG VON MEMBRANEN**

MEMBRANE PRODUCTION METHOD

PROCEDE DE FABRICATION DE MEMBRANES

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **13.01.2004 DE 102004001975**

(43) Veröffentlichungstag der Anmeldung:
**04.10.2006 Patentblatt 2006/40**

(73) Patentinhaber: **BASF Aktiengesellschaft**
**67056 Ludwigshafen (DE)**

(72) Erfinder:
 • **BITTERLICH, Stefan**
   **67246 Dirmstein (DE)**
 • **VOSS, Hartwig**
   **67227 Frankenthal (DE)**
 • **SCHUCH, Gunter**
   **67071 Ludwigshafen (DE)**
 • **DIEFENBACHER, Armin**
   **76726 Germersheim (DE)**

 • **NOACK, Manfred**
   **12683 Berlin (DE)**
 • **SCHÄFER, Roland**
   **73430 Aalen (DE)**
 • **VOIGT, Ingolf**
   **07743 Jena (DE)**
 • **RICHTER, Hannes**
   **07629 Hermsdorf (DE)**
 • **CARO, Jürgen**
   **13129 Berlin (DE)**

(74) Vertreter: **Isenbruck, Günter et al**
**Isenbruck, Bösl, Hörschler, Wichmann, Huhn**
**Patentanwälte**
**Theodor-Heuss-Anlage 12**
**68165 Mannheim (DE)**

(56) Entgegenhaltungen:
**US-B1- 6 472 016**

**Beschreibung**

Die vorliegende Erfindung betrifft ein Verfahren zur Herstellung von Membranen, die mindestens eine Funktionsschicht auf mindestens einem porösen Träger enthalten, durch Behandeln der zu beschichtenden Seite des Trägers mit einer Syntheselösung.

Verfahren zur Herstellung von Membranen sind bekannt. So beschreibt beispielsweise die US 6,090,289 ein Verfahren zur Herstellung von Zeolithmembranen, wobei das Verfahren das Inkontaktbringen von Molekularsiebkristallen mit einer Partikelgröße von mindestens 1 $\mu$m mit einem Trägermaterial, das Inkontaktbringen des so beschichteten Trägermaterials mit einer Molekularsiebsyntheselösung und eine abschließende Hydrothermalsynthese des beschichteten Trägers umfasst.

US 6,177,373 beschreibt ein Verfahren zur Herstellung von Zeolithmembranen, bei dem Mikrokristalle des Molekularsiebs auf dem Trägermaterial in einem ersten Schritt als eine Monoschicht aufgetragen werden. In einem sich anschließenden zweiten Verfahrensschritt erfolgt ein Kristallwachstum zu einem dünnen, kontinuierlichen und dichten Film auf dem Trägermaterial.

Beide Verfahren des Standes der Technik werden im Allgemeinen so durchgeführt, dass das Trägermaterial mit einer Lösung (Syntheselösung), aus der unter hydrothermalen Bedingungen Zeolithkristalle entstehen, in Kontakt gebracht wird.

WO 00/20105 beschreibt ein Verfahren zur Herstellung von mikroporösen Membranen auf meso- und/oder makroporösen keramischen Mehrkanalrohren, wobei nur die Kanäle, nicht aber die Außenseite des Elements beschichtet sind. Bei derartigen Herstellungsverfahren besteht die Aufgabe, den Kontakt der Syntheselösung mit bestimmten Oberflächen des porösen Trägermaterials zu vermeiden bzw. dessen Porenstruktur von der Syntheselösung freizuhalten, damit diese Oberfläche nicht von der abzuscheidenden Schicht bedeckt wird.

EP 1 144 099, die ein Verfahren zur Herstellung von Membranen beschreibt, löst diese Aufgabe dadurch, dass das poröse Trägermaterial vor dem Inkontaktbringen mit der Syntheselösung mit einer inerten Lösung imprägniert wird.

US 6,090,289 und US 6,177,373 lösen diese Aufgabe dadurch, dass der Träger vor dem Inkontaktbringen mit der Syntheselösung an den Stellen, die nicht beschichtet werden sollen, mit einer temporären oder bleibenden Barriereschicht versehen wird. Diese Barriereschicht verhindert das Eindringen der Syntheselösung in die Poren des Trägers an den nicht zu beschichtenden Stellen. Die temporäre Barriereschicht wird nach der Behandlung des Trägermaterials mit der Syntheselösung wieder entfernt. Dieses kann beispielsweise durch Verdampfen erfolgen. Beispiele für geeignete temporäre Barriereschichten sind Wasser oder Glykol. Eine bleibende Barriereschicht verbleibt demgegenüber nach dem Inkontaktbringen des Trägermaterials mit der Syntheselösung auf dem porösen Träger. Beispiel hierfür sind Metalloxide.

Nachteilig an den zuvor genannten Barriereschichten ist, dass deren Aufbringung einen zusätzlichen Arbeitsschritt bedingt. Im Falle der temporären Barriereschicht ist darüber hinaus noch ein weiterer Arbeitsschritt zur Entfernung der Barriereschicht notwendig.

Aufgabe der vorliegenden Erfindung ist somit, ein Verfahren zur Herstellung von Membranen bereitzustellen, welches es ermöglicht, nur bestimmte Bereiche des Trägermaterials zu beschichten und welches die aufwendigen Verfahren des Standes der Technik vermeidet.

Gelöst wird diese Aufgabe durch ein Verfahren zur Herstellung von Membranen, die mindestens eine Feststoffschicht auf einer Seite eines porösen Trägers enthalten, durch Behandeln der zu beschichtenden Seite des Trägers mit einer die Feststoffschicht ausbildenden Syntheselösung.

Das erfindungsgemäße Verfahren ist dadurch gekennzeichnet, dass bei der Herstellung der Feststoffschicht auf dem porösen Träger der Träger selbst teilweise oder vollständig sowie der Raum, der sich mit der nicht zu beschichtenden Seite des porösen Trägers in Kontakt befindet, mit einem inerten Fluid gefüllt ist, wobei der Druck und/oder die Temperatur des Fluids so gewählt wird, dass ein Kontakt der Syntheselösung mit der nicht zu beschichtenden Seite des porösen Trägers im Wesentlichen verhindert wird. Dabei ist der Begriff Syntheselösung nicht auf klare Lösungen beschränkt; vielmehr können die Syntheselösungen bei dem erfindungsgemäßen Verfahren auch kolloidal gelöste oder partikuläre Bestandteile enthalten.

Unter im Wesentlichen wird im Rahmen der vorliegenden Erfindung verstanden, dass mindestens 90 %, vorzugsweise mindestens 95 %, besonders bevorzugt mindestens 99 %, der nicht zu beschichtenden Seite des porösen Trägers mit der Syntheselösung nicht bedeckt wird.

Das erfindungsgemäße Verfahren eignet sich insbesondere für die Herstellung von so genannten Komposit-Membranen für Stofftrennungen. Diese Membranen bestehen im Allgemeinen aus einem Träger, der aus einem oder mehreren makro- und/oder mesoporösen Schichten aufgebaut ist, und einer Trennschicht, die porenfrei oder mikroporös ist oder Poren aufweist, die kleiner als die des Trägers sind. Die Trennschicht, die meist nur einen geringen Teil der Membrandicke ausmacht, bewirkt dabei die Stofftrennung, während das Trägermaterial die mechanische Stabilität der Membran sicherstellt. Die durch das erfindungsgemäße Verfahren hergestellten Membranen sind vorzugsweise organischer, organisch/anorganischer oder anorganischer Natur. Besonders bevorzugt ist, wenn die Membran anorganischer Natur ist.

*Beschichtungsverfahren*

In dem erfindungsgemäßen Verfahren werden die Membranen durch Behandeln der zu beschichtenden Seite des porösen Trägers mit einer Syntheselösung hergestellt, wobei der Träger selbst teilweise oder vollständig sowie der Raum, der sich mit der nicht zu beschichtenden Seite des porösen Trägers in Kontakt befindet, mit einem inerten Fluid gefüllt wird, und wobei der Druck und/oder die Temperatur des Fluids so gewählt werden, dass ein Kontakt der Syntheselösung mit der nicht zu beschichtenden Seite des porösen Trägers verhindert wird.

Dabei ist es bevorzugt, dass der Zustand des Fluids durch den Druck des Fluids eingestellt wird. So ist besonders bevorzugt, dass der Druck des Fluids auf einem Wert gehalten wird, der mindestens dem Druck der Syntheselösung entspricht, wenn der von Syntheselösung und Trägermaterial gebildete Randwinkel kleiner 90 ° ist. Ist der Randwinkel von Syntheselösung und Trägermaterial größer 90 °, so ist es bevorzugt, dass der Druck des Fluids auf einem Wert gehalten wird, der höchstens dem Druck der Syntheselösung entspricht. Ist der von Syntheselösung und Trägermaterial gebildete Randwinkel 90 °, so ist der Druck des Fluids gleich dem Druck der Syntheselösung. Bezüglich der Definition des Randwinkels wird auf Kohlrausch, Praktische Physik, 21. Auflage 1960, Bd. I, S. 188 verwiesen.

Wird eine wässrige Syntheselösung verwendet, so gilt: Wenn der Träger hydrophil ist, so ist der Randwinkel kleiner 90 °, da die Membran benetzt wird. Wenn der Träger hydrophob ist, so ist der Randwinkel größer 90 °.

Dabei kann die Einstellung des Drucks beliebig, beispielsweise durch hydrostatische Anordnungen, Pumpen, Ventile, Druckgasbehälter oder geeigneten Kombinationen davon, erfolgen.

In einer weiteren Ausführungsform der vorliegenden Erfindung ist es bevorzugt, dass die Temperaturdifferenz zwischen Fluid und der Syntheselösung höchstens 20 °C, besonders bevorzugt höchstens 10 °C, insbesondere höchstens 5 °C, beträgt.

In Fällen, in denen eine Diffusion von Komponenten der Syntheselösung in das Fluid und/oder umgekehrt möglich ist, kann die Syntheselösung und/oder das Fluid mit den Komponenten, deren Eindiffision jeweils verhindert oder gebremst werden soll, vollständig oder teilweise vorgesättigt werden. Unter einer teilweisen Vorsättigung der Syntheselösung bzw. des Fluids wird verstanden, dass das Fluid mit jeweils mindestens 50 %, vorzugsweise mindestens 90 %, besonders bevorzugt mindestens 99 %, bezogen auf die Sättigungsgrenze der Komponente, deren Eindiffusion verhindert oder gebremst werden soll, im jeweiligen Fluid oder des Fluid in der die jeweiligen Syntheselösung, vorgesättigt wird.

Wird beispielsweise eine wässrige Syntheselösung und ein gasförmiges Fluid verwendet, so kann das gasförmige Fluid vor der Abscheidung der Schicht auf dem Träger mit Wasser vorgesättigt werden. Genauso ist es möglich, dass entweder das Fluid oder die Syntheselösung mit einem anderen, aber inerten Substrat gesättigt wird.

Während der Abscheidung der Syntheselösung auf dem Träger kann die Syntheselösung ruhen, ein- oder mehrmalig bewegt oder ausgetauscht oder, in einer besonders bevorzugten Ausführungsform des erfindungsgemäßen Verfahrens, mindestens 90 %, vorzugsweise mindestens 95 %, der für die Herstellung der Trennschicht benötigten Zeit in einer gerichteten Bewegung gehalten werden. Damit wird verhindert, dass während der Kontaktzeit der Syntheselösung mit dem Träger eine lokale Verarmung an membranbildendem Material auftritt und die so verursachten lokalen Dichteunterschiede zu Konvektionsströmungen und zu Fluktuationen der Konzentration führen, die in ihrer Wirkung schwer zu berechnen sind und eine reproduzierbare Herstellung, insbesondere sehr dünner Trennschichten, erschweren. Eine solche Membransynthese mit einer gerichteten Bewegung ist beispielsweise beschrieben in: H. Richter, I. Voigt, G. Fischer, P. Puhlfürß, 7th International Conference on Inorganic Membranes, Dalian, China, June 23-26, 2002; Separation and Purification Technology 32 (2003) 133-138).

Wenn die Syntheselösung sich in einer gerichteten Bewegung in dem erfindungsgemäßen Verfahren befindet, so sollte die Strömungsgeschwindigkeit der Syntheselösung vorzugsweise 0,001 bis 100 cm/min, besonders bevorzugt 0,01 bis 10 cm/min, insbesondere 0,01 bis 5 cm/min, betragen. In einer weiteren bevorzugten Ausführungsform des erfindungsgemäßen Verfahrens wird die Strömungsgeschwindigkeit so eingestellt, dass der Druckverlust der Syntheselösung beim Überströmen des Trägers vorzugsweise kleiner 0,1 bar, besonders bevorzugt kleiner 0,01 bar, insbesondere kleiner 0,002 bar, ist.

Dabei kann die Überströmung mit Syntheselösung im einfachen Durchgang erfolgen, d. h. die Lösung wird mittels Schwerkraft oder durch eine Pumpe aus einem Reservoir über den Träger und von dort in ein Sammelgefäß geführt. Alternativ kann die Syntheselösung aber auch über den Träger im Kreis gepumpt werden. Ferner ist es möglich, die Syntheselösung zwischen zwei Reservoirs über den Träger unter Verwendung von Pumpen oder von Gasdruck hin und her zu führen.

Die Beschichtung erfolgt vorzugsweise bei Temperaturen von 100 bis 250 °C, besonders bevorzugt 140 bis 210 °C, insbesondere 170 bis 190 °C

Der Träger ist während der Beschichtung mit dem membranbildenden Material der Syntheselösung vorzugsweise in eine Vorrichtung eingebaut.

Während des Herstellvorgangs kann die zu beschichtende Oberfläche des Trägermaterials senkrecht, schräg oder waagerecht, vorzugsweise waagerecht, in der Vorrichtung, eingebaut sein, wobei die zuletzt genannte Variante wegen der Vergleichmäßigung der Druckdifferenz zwischen Syntheselösung und Fluid besonders vorteilhaft ist.

Das erfindungsgemäße Verfahren zur Herstellung von Membranen, die mindestens eines Schicht auf mindestens einem porösen Träger enthalten, durch Behandeln der zu beschichtenden Seite des Trägers mit einer Syntheselösung kann in einem Gesamtverfahren zur Herstellung einer Membran eingebunden sein. Ein dem erfindungsgemäßen Verfahren vorgelagerter Schritt kann dabei die Aufbringung von Kristallisa-tionskeimen auf dem Träger sein. Ein nachgelagerter Schritt kann beispielsweise die thermische Behandlung der Membran zur Entfernung von flüchtigen oder thermisch zersetzbaren Komponenten, gegebenenfalls nach einer Spülung zwecks Entfernung von Komponenten, die die thermische Beständigkeit beeinträchtigen, sein.

Falls die Aufbringung von Kristallisationskeimen vor dem erfindungsgemäßen Verfahren erfolgt, so kann dieses beispielsweise durch eine hydrothermale Kristallisation erfolgen. So sind Verfahren zur Hydrothermalsynthese von zeolithischen Keimschichten dem Fachmann an sich bekannt. Eine hierfür geeignete Lösung kann eine Si-Quelle, eine Aluminium-Quelle, eine Alkali-Quelle, ein Templat und Wasser enthalten. Ein Beispiel dafür ist die Verwendung von $SiO_2$, NaOH, Tetrapropylammoniumverbindungen als Templat und Wasser.

An die Beschichtung schließt sich gegebenenfalls auch ein Spülen der hergestellten Membran, beispielsweise mit Wasser, vorzugsweise mit destilliertem Wasser, an.

Die Abdichtung des von der Syntheselösung gefüllten Raumes von dem mit Fluid gefülltem Raum kann entweder mittels Dichtungen aus organisch-polymerem Material, beispielsweise aus PTFE, aus Elastomeren wie Viton® oder Kalrez®, oder aus Graphit bzw. Verbundmaterialien erfolgen. Alternativ ist es auch möglich, dass der Träger Bestandteil eines Körpers ist, der den von der Syntheselösung gefüllten Raum von dem mit Fluid gefülltem Raum abtrennt, wie es beispielsweise bei einer Anordnung der Fall ist, bei der der poröse keramische Träger Teil eines vollkeramischen Moduls ist.

Die oben erwähnte thermische Nachbehandlung kann beispielsweise in Abhängigkeit von der Art der Abdichtung, gegebenenfalls nachdem die erzeugte Membran aus der für die Beschichtung verwendeten Vorrichtung ausgebaut wurde, durchgeführt werden. Alternativ ist es aber auch möglich, dass die Vorrichtung, in die der Träger während der Beschichtung gegebenenfalls eingebaut war, ebenfalls der Temperung unterworfen wird.

*Feststoffschicht*

Die in dem erfindungsgemäßen Verfahren auf dem porösen Träger aufgebrachte Feststoffschicht ist vorzugsweise porenfrei, mikroporös oder weist Poren auf, die kleiner sind als die Poren der Trägerschicht. In einer besonderen Ausführungsform der vorliegenden Erfindung beträgt die Porengröße der in dem erfindungsgemäßen Verfahren hergestellten Schicht auf dem Träger 0,3 bis 100 nm, besonders bevorzugt 0,4 bis 10 nm, insbesondere 0,4 bis 1 nm.

Die auf dem porösen Träger aufgebrachte Schicht eignet sich insbesondere zur Stofftrennung. Beispiele hierfür sind Gastrennungen, wie die Abtrennung von Wasserstoff oder Sauerstoff aus Gasgemischen, die Abtrennung von Wasserdampf aus dampf- bzw. gasförmigen Gemischen, die Trennung von Olefinen und Parafinen, die Trennung von Aromaten und Aliphaten und die Trennung linearer und verzweigter Kohlenwasserstoffe.

Darüber hinaus sollten sich die Schichten vorzugsweise zur Abtrennung von Wasser aus flüssigen Gemischen mittels Pervaporation und für die Nano-, Mikro- oder Ultrafiltration von flüssigen Gemischen eignen.

Es ist besonders bevorzugt, dass die Schicht, die in dem erfindungsgemäßen Verfahren auf dem porösen Träger aufgezogen wird, aus einem kristallinen oder amorphen Material besteht. Besteht die Schicht aus einem kristallinen Material, so ist dieses vorzugsweise ausgewählt aus der Gruppe, bestehend aus Zeolithen oder gemischt leitenden Oxiden mit Perowskit- oder Perowskit-ähnlicher Struktur. Besteht die auf dem Trägermaterial aufgebrachte Schicht aus einem amorphen Material, so ist dieses amorphe Material vorzugsweise ausgewählt aus der Gruppe, bestehend aus Metalloxiden, beispielsweise amorphen Silika, Titania oder Zirkonia.

*Fluid*

Das im erfindungsgemäßen Verfahren verwendete Fluid ist vorzugsweise flüssig oder gasförmig.

Wenn das in dem erfindungsgemäßen Verfahren verwendete Fluid gasförmig ist, so ist es vorzugsweise ausgewählt aus der Gruppe, bestehend aus Luft und Stickstoff. Wenn in dem erfindungsgemäßen Verfahren ein flüssiges Fluid verwendet wird, so ist es bevorzugt, dass die Flüssigkeit kein membranbildendes Material enthält. Das Fluid kann, falls es sich um eine Flüssigkeit handelt, beispielsweise ausgewählt sein aus der Gruppe, bestehend aus Wasser und Flüssigkeiten, die mit der Syntheselösung eine Mischungslücke bilden.

*Träger*

Der in dem erfindungsgemäßen Verfahren verwendete poröse Träger besteht vorzugsweise aus einem Material ausgewählt aus der Gruppe, bestehend aus Aluminiumoxiden, Titanoxiden, Zirkoniumoxiden, Magnesiumoxiden, Metallen und Kohlenstoff. Weiter ist bevorzugt, dass das Trägermaterial Metalle in Form poröser Sinterkörper enthält. Dabei soll das Trägermaterial die mechanische Stabilität der erfindungsgemäß hergestellten Membran im Wesentlichen sicherstellen.

Das Material des porösen Trägers weist vorzugsweise Porendurchmesser von 1 nm bis 100 $\mu$m besonders bevorzugt 5 nm bis 10 $\mu$m auf, wobei in einer bevorzugten Ausführungsform der Träger aus mehreren Bereichen mit unterschiedlichen mittleren Porendurchmessern aufgebaut ist und die mittleren Porendurchmesser zu der zu beschichtenden Seite des Trägers hin abnehmen.

Die mit dem erfindungsgemäßen Verfahren beschichteten Trägermaterialien können die Form von Einzelrohren haben, wobei die Beschichtung auf der Außen- oder, besonders vorteilhaft, auf der Innenseite erfolgt. Alternativ ist es allerdings auch möglich, alle dem Fachmann an sich bekannten Mehrkanalelemente, bei denen die Beschichtung im Allgemeinen auf der Innenseite der Kanäle erfolgt, zu verwenden. Darüber hinaus ist es möglich, dass es sich bei dem Trägermaterial um Kapillare oder um Flachkörper handelt, wobei insbesondere bei den Kapillaren eine Beschichtung auf der Außen- oder, besonders bevorzugt, der Innenseite erfolgt.

Die Enden des Trägers sind vorzugsweise so vorbehandelt, dass ein Stofftransport zwischen der zu beschichtenden und der nicht zu beschichtenden Seite des Trägers, der nicht über die zu beschichtende bzw. die beschichtete Seite des Trägers stattfindet, unterdrückt wird. Dies kann z.B. durch Aufbringen eines dichten Materials wie z.B. einem der an sich bekannten Glaslote geschehen, das den Träger mindestens an der Stelle, an der er während der Synthese eingedichtet ist und an der Stelle, an der die im erfindungsgemäßen Verfahren erzeugte Membran eingedichtet ist, bedeckt. Im Falle einer rohrförmigen bzw. Mehrkanal-Geometrie des Trägers bedeckt dabei das dichte Material bevorzugt auch die Stirnfläche des Rohres bzw. Mehrkanalelements.

Weiterer Gegenstand der vorliegenden Erfindung sind die durch das erfindungsgemäße Verfahren hergestellten Membranen, die eine Feststoffschicht auf einem porösen Träger enthalten.

Weiterer Gegenstand der vorliegenden Erfindung ist die Verwendung der durch das erfindungsgemäße Verfahren hergestellten Membranen für Gastrennungen, beispielsweise für die Abtrennung von Wasserstoff oder Sauerstoff aus Gasgemischen, der Abtrennung von Wasserdampf aus dampf- bzw. gasförmigen Gemischen, die Trennung von Olefinen und Paraffinen, die Trennung von Aromaten und Aliphaten, die Trennung von linearen und verzweigten Kohlenwasserstoffen. Weitere Verwendungen für die durch das erfindungsgemäße Verfahren hergestellten Membranen sind die Abtrennung von Wasser aus flüssigen Gemischen mittels Pervaporation und die Nano-, Ultra- oder Mikrofiltration von flüssigen Gemischen.

Darüber hinaus können die durch das erfindungsgemäße Verfahren hergestellten Membranen oder die erfindungsgemäßen Membranen in so genannten Membranreaktoren eingesetzt werden, bei denen mindestens ein Reaktant, beispielsweise Wasserstoff oder Sauerstoff, über die Membran dem Reaktionsraum, beispielsweise einer Katalysatorschüttung, zugeführt wird oder mindestens ein Reaktionsprodukt, beispielsweise Wasserstoff, über die Membran dem Reaktionsraum, beispielsweise einer Katalysatorschüttung, entzogen wird.

Die vorliegende Erfindung wird anhand der nachfolgenden Beispiele näher erläutert.

**Ausführungsbeispiele**

Beispiel 1:

Ein Einkanalrohr der Fa. Inocermic (Hermsdorf, Deutschland) aus $\alpha$-Al$_2$O$_3$ (Außendurchmesser 10 mm, Innendurchmesser 7 mm, Länge 300 mm) mit asymmetrischem Aufbau und einem mittleren Porendurchmesser von 60 nm auf der Innenseite, an beiden Enden auf eine Länge von jeweils 20 mm mit einem Glasüberzug versehen, wird zunächst wie folgt bekeimt:

Die Keimsuspension wird nach dem Verfahren von Persson et al. (Zeolites 14 (1994), 557 ff) durch hydrothermale Kristallisation aus einer Lösung der molaren Zusammensetzung 9 Tetrapropylammoniumhydroxid (1M wässrige Lösung, Fa. Sigma),

25 SiO$_2$ (Köstrosol 0830, Chemiewerk Köstritz),

360 H$_2$O,

100 EtOH

über 2 Wochen bei 60 °C hergestellt.

Die kolloidalen Keimkristalle werden durch Zentrifugieren von der Mutterlösung getrennt, mehrfach mit Wasser gewaschen und anschließend auf einen Feststoffanteil von 2 Massen-% eingestellt.

Die Bekeimung des o. g. Einkanalrohres erfolgt nach einem von Hedlund et al. (in H. Chon, S.-K. Ihm, Y. S.

Uh (Eds.), Progress in Zeolites and Microporous Materials, Elsevier, Amsterdam, 1997, 2203 ff.) beschriebenen Verfahren, wobei das Einkanalrohr für 10 min in eine 0,4 gew.-%ige Lösung des kationischen Polymers Redifloc 4150 (Fa. Nobel AB, Schweden) und anschließend für weitere 10 min in die Seedlösung eingetaucht wird. Nach jedem Arbeitsschritt wird der Träger mit destilliertem Wasser gespült. Das so behandelte Einkanalrohr wird zwecks Trocknung 12 Stunden bei Raumtemperatur an der Luft liegen gelassen und dann getempert, indem es mit 1 K/min bis auf 450 °C aufgeheizt, eine Stunde lang bei 450 °C gehalten und anschließend mit 1 K/min wieder abgekühlt wird.

Danach wird das Einkanalrohr in einen Apparat A derart eingebaut, dass das Rohr das Innenvolumen des Apparats in einen Rohrinnen- und einen Rohraußenraum teilte, die mittels zwei im Bereich der beiden Verglasungen das Rohr umgebenden O-Ringen (Viton®) gegeneinander abgedichtet sind. Der Apparat verfügt über eine Zuleitung zum Rohrinnenraum an dem einen Ende des Rohres und eine Ableitung aus dem Rohrinnenraum an dem anderen Ende des Rohres sowie eine Zuleitung zum Rohraußenraum. Der Apparat ist Teil einer Syntheseapparatur, die so aufgebaut ist, dass der Apparat senkrecht steht, seine untenliegende Zuleitung zum Rohrinnenraum über eine Leitung mit einem Vorlagebehälter B verbunden ist und seine obenliegende Ableitung aus dem Rohraußenraum über eine Leitung mit einem Kühler K (Rohrschlange, in Kühlwasser getaucht) verbunden ist, an den sich eine Vorrichtung zur Druckhaltung, z.B. ein Nadelventil, anschließt. Der Vorlagebehälter B verfügte an der obersten Stelle über eine Zuleitung. Diese Zuleitung sowie die Zuleitung zum Rohraußenraum des Apparats A sind über Leitungen über ein T-Stück mit dem Reduzierventil einer Stickstoffflasche verbunden. Der Apparat A sowie ca. 300 mm der Leitung zu der zum Rohrinnenraum führenden Zuleitung sind in ein thermostatisierbares Ölbad getaucht.

In den Vorlagebehälter wird eine Syntheselösung mit folgender molarer Zusammensetzung eingefüllt:

0,035 Tetrapropylammoniumbromid ("purum", Fa. Fluka),
1 $SiO_2$ (Köstrosol 0830, Chemiewerk Köstritz),
85 $H_2O$,
0,035 $Na_2O$ (als NaOH-Plätzchen, Fa. Merck).

Die Zuleitung zum Vorlagebehälter B und die Zuleitung zum Rohraußenraum des Apparats A werden getrennt über Leitungen mit den Reduzierventilen zweier Stickstoffflaschen verbunden. An dem mit der Zuleitung zum Vorlagebehälter B verbundenen Reduzierventil wird ein Druck von 9 bar (Überdruck) und an dem mit der Zuleitung zum Rohraußenraum des Apparats A verbundenen Reduzierventil ein Druck von 9,5 bar (Überdruck) eingestellt. Das Ölbad, in dem sich der Apparat A befindet, wird auf 150 °C aufgeheizt. Das Nadelventil nach dem Kühler K wird geöffnet, so dass sich eine Durchströmung der Anordnung von Behälter B über den Apparat A und den Kühler K ergibt. Das Nadelventil wird so eingestellt, dass sich im Einkanalrohr eine Strömungsgeschwindigkeit von 0,25 cm/min ergibt, wobei die Messung der durchgeströmten Menge mittels eines nach dem Nadelventil platzierten kalibrierten Auffanggefäßes erfolgt. Die Durchströmung wird für 72 Stunden aufrechterhalten. Danach wird die Ölbadtemperatur innerhalb 30 min auf 90 °C abgesenkt. Die Membran wird aus dem Apparat A ausgebaut, mit 5 l destilliertem Wasser durchspült und anschließend bei 450 °C für unter Luft getempert, indem mit 1 K/min bis auf 450 °C aufgeheizt, eine Stunde lang bei 450 °C gehalten und anschließend mit 1 K/min wieder abgekühlt wird.

Mit der so hergestellten Membran werden Permeationsmessungen mit Wasserstoff und Schwefelhexafluorid durchgeführt. Die Messung erfolgt in einer Testzelle, in der die Membran mittels O-Ringen aus Viton eingedichtet wird. Zunächst wird die Zelle auf 110 °C aufgeheizt. Danach wird der Feedraum der Testzelle (Innenseite des Membranrohrs) und der Permeatraum (Außenseite des Membranrohrs) bis zu einem Druck von $10^{-4}$ mbar absolut evakuiert und bei diesem Druck für 30 min gehalten. Nachfolgend wird die Feedseite mit dem Messgas ($H_2$ oder $SF_6$) gefüllt, so dass sich ein Feeddruck von 1 bar absolut ergibt. Aus dem zeitlichen Verlauf des Druckanstiegs auf der Permeatseite wird die Permeanz Q für das jeweilige Gas berechnet. Diese ergibt sich aus der Anfangssteigung des zeitlichen Verlaufs des Permeatdrucks nach folgender Gleichung

$$Q = V_{Permeat}/(R\ T)*(d\ p_{Permeat}/d\ t)_{t=0}.$$

Die Ergebnisse sind in Tabelle 1 dargestellt.

Die dort aufgeführte Permeanz ist definiert als Flussdichte des jeweiligen Gases, geteilt durch die transmembrane Druckdifferenz.

Beispiel 2 (Vergleichsbeispiel):

Es wird wie in Beispiel 1 verfahren, mit dem Unterschied, dass das Einkanalrohr vor Einbau in den Apparat A mit Teflonband umwickelt wird und die Außenseite während der Synthese mit Syntheselösung beaufschlagt ist.

Die Ergebnisse der Permeationsmessungen mit der so hergestellten Membran sind ebenfalls in Tabelle 1 dargestellt.

Der Vergleich der Messdaten zeigt, dass die nach dem erfindungsgemäßen Verfahren hergestellte Membran bei ungefähr gleicher Permselektivität eine deutlich höhere Permeanz für beide Einzelstoffe zeigt.

Tabelle 1:

| Herstellverfahren gemäß Beispiel | $H_2$-Permeanz | $SF_6$-Permeanz | Permselektivität |
|---|---|---|---|
| | Mol/($m^2$h bar) | Mol/($m^2$h bar) | $H_2/SF_6$ |
| 1 | 705 | 36 | 19,4 |
| 2 | 426 | 22 | 19,7 |

**Patentansprüche**

1. Verfahren zur Herstellung von Membranen, die mindestens eine Feststoffschicht auf einer Seite eines porösen Trägers enthalten, durch Behandeln der zu beschichtenden Seite des Trägers mit einer die Feststoffschicht ausbildenden Syntheselösung, **dadurch gekennzeichnet, dass** bei der Herstellung der Feststoffschicht auf dem porösen Träger der Träger selbst teilweise oder vollständig sowie der Raum, der sich mit der nicht zu beschichtenden Seite des porösen Trägers in Kontakt befindet, mit einem inerten Fluid gefüllt ist, wobei der Druck und/oder die Temperatur des Fluids so gewählt werden, dass ein Kontakt der Syntheselösung mit der nicht zu beschichtenden Seite des porösen Trägers im Wesentlichen verhindert wird.

2. Verfahren nach Anspruch 1, **dadurch gekennzeichnet, dass** der Träger ein Material enthält, das ausgewählt ist aus der Gruppe, bestehend aus Aluminiumoxiden, Titanoxiden, Zirkoniumoxiden, Magnesiumoxid, Metallen und Kohlenstoff.

3. Verfahren nach Anspruch 1 oder 2, **dadurch gekennzeichnet, dass** das Fluid gasförmig ist und ausgewählt ist aus der Gruppe, bestehend aus Luft und Stickstoff.

4. Verfahren nach Anspruch 1 oder 2, **dadurch gekennzeichnet, dass** das Fluid flüssig ist und ausgewählt ist aus der Gruppe, bestehend aus Wasser und Flüssigkeiten, die mit der Syntheselösung eine Mischungslücke bilden.

5. Verfahren nach einem der Ansprüche 1 bis 4, **dadurch gekennzeichnet, dass** der Druck des Fluids während der Herstellung der Feststoffschicht auf einem Wert gehalten wird, der mindestens dem Druck der Syntheselösung entspricht, wenn der von Syntheselösung und Trägermaterial gebildete Randwinkel kleiner 90 ° ist.

6. Verfahren nach einem der Ansprüche 1 bis 4, **dadurch gekennzeichnet, dass** der Druck des Fluids während der Herstellung der Feststoffschicht auf einem Wert gehalten wird, der höchstens dem Druck der Syntheselösung entspricht, wenn der von Syntheselösung und Trägermaterial gebildete Randwinkel größer 90 ° ist.

7. Verfahren nach einem der Ansprüche 1 bis 6, **dadurch gekennzeichnet, dass** die Schicht aus einem kristallinen Material besteht, das ausgewählt ist aus der Gruppe, bestehend aus Zeolithen oder gemischt leitenden Oxiden mit Perowskit- oder Perowskit-ähnlicher Struktur.

8. Verfahren nach einem der Ansprüche 1 bis 7, **dadurch gekennzeichnet, dass** die Schicht aus einem amorphen Material besteht, das ausgewählt ist aus der Gruppe der Metalloxide.

9. Membran, erhältlich nach dem Verfahren gemäß einem der Patentansprüche 1 bis 8.

10. Verwendung der Membran gemäß Anspruch 9 zur Stofftrennung mittels Gaspermeation, Pervaporation und für die Nano-, Ultra- oder Mikrofiltration von flüssigen Gemischen.

**Claims**

1. A process for the production of membranes, which contain at least one solid layer on one side of a porous substrate, by treating, with synthesis solution forming the solid layer, that side of the substrate which is to be coated, wherein, in the production of the solid layer on the porous substrate, the substrate itself is partly or completely filled with an inert fluid and the space which is in contact with that side of the porous substrate which is not to be coated is filled with an inert fluid, the pressure and/or the temperature of the fluid being chosen so that contact of the synthesis solution with that side of the porous substrate which is not to be coated is substantially prevented.

**2.** A process according to claim 1, wherein the substrate contains material which is selected from the group consisting of aluminum oxides, titanium oxides, zirconium oxides, magnesium oxide, metals and carbon.

**3.** A process according to claim 1 or 2, wherein the fluid is gaseous and is selected from the group consisting of air and nitrogen.

**4.** A process according to claim 1 or 2, wherein the fluid is liquid and is selected from the group consisting of water and liquids which form a miscibility gap with the synthesis solution.

**5.** A process according to any of claims 1 to 4, wherein the pressure of the fluid during the production of the solid layer is kept at a value which corresponds to the solution where the contact angle formed by the synthesis solution and substrate material is less than 90°.

**6.** A process according to any of claims 1 to 4, wherein the pressure of the fluid during the production of the solid layer is kept at a value which corresponds to not more than the pressure of the synthesis solution where the contact angle made by synthesis solution and substrate material is greater than 90°.

**7.** A process according to any of claims 1 to 6, wherein the layer consists of a crystalline material which is selected from the group consisting of zeolites or mixed-conductivity oxides having a perovskite or perovskite-like structure.

**8.** A process according to any of claims 1 to 7, wherein the layer consists of an amorphous material which is selected from the group consisting of the metal oxides.

**9.** A membrane obtainable by a process according to any of claims 1 to 8.

**10.** The use of a membrane according to claim 9 for separating substances by means of gas permeation or pervaporation and for the nano-, ultra- or microfiltration of fluid mixtures.

**Revendications**

**1.** Procédé pour la préparation de membranes, qui contiennent au moins une couche dure sur une face d'un support poreux, par traitement de la face à enduire du support avec une solution de synthèse constituant la couche dure, **caractérisé en ce que** lors de la préparation de la couche dure sur le support poreux, le support proprement dit, partiellement ou totalement, de même que l'espace qui est en contact avec la face du support poreux qui ne doit pas être enduite, est rempli d'un fluide inerte, la pression et/ou la température du fluide étant sélectionnées de manière à empêcher essentiellement un contact de la solution de synthèse avec la face du support poreux qui ne doit pas être enduite.

**2.** Procédé selon la revendication 1, **caractérisé en ce que** le support contient un matériau qui est sélectionné dans le groupe comprenant des oxydes d'aluminium, des oxydes de titane, des oxydes de zirconium, de l'oxyde de magnésium, des métaux et du carbone.

**3.** Procédé selon la revendication 1 ou 2, **caractérisé en ce que** le fluide est gazeux et sélectionné dans le groupe constitué d'air et d'azote.

**4.** Procédé selon la revendication 1 ou 2, **caractérisé en ce que** le fluide est liquide et sélectionné dans le groupe constitué d'eau et de liquides qui forment une lacune de mélange avec la solution de synthèse.

**5.** Procédé selon l'une des revendications 1 à 4, **caractérisé en ce que** la pression du fluide pendant la préparation de la couche dure est maintenue à une valeur qui correspond au moins à la pression de la solution de synthèse lorsque l'angle au bord formé par la solution de synthèse et le matériau support est inférieur à 90°.

**6.** Procédé selon l'une des revendications 1 à 4, **caractérisé en ce que** la pression du fluide pendant la préparation de la couche dure est maintenue à une valeur qui correspond au plus à la pression de la solution de synthèse lorsque l'angle au bord formé par la solution de synthèse et le matériau support est supérieur à 90°.

**7.** Procédé selon l'une des revendications 1 à 6, **caractérisé en ce que** la couche est constituée d'un matériau cristallin qui est sélectionné dans le groupe constitué de zéolithes ou d'oxydes à conduction mixte à structure de pérovskite ou similaire à la pérovskite.

**8.** Procédé selon l'une des revendications 1 à 7, **caractérisé en ce que** la couche est constituée d'un matériau amorphe qui est sélectionné dans le groupe des oxydes métalliques.

**9.** Membrane qui peut être obtenue selon le procédé suivant l'une des revendications 1 à 8.

**10.** Utilisation de la membrane selon la revendication 9 pour la séparation de matière au moyen de la perméation au gaz, de la pervaporation et pour la nanofiltration, l'ultrafiltration ou la microfiltration de mélanges liquides.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6090289 A
- US 6177373 B
- WO 0020105 A
- EP 1144099 A

**In der Beschreibung aufgeführte Nicht-Patentliteratur**

- *Praktische Physik,* 1960, vol. 21, 188
- **H. RICHTER ; I. VOIGT ; G. FISCHER ; P. PUHLFÜRß.** *7th International Conference on Inorganic Membranes,* 23. Juni 2002
- *Separation and Purification Technology,* 2003, vol. 32, 133-138
- **PERSSON et al.** *Zeolites,* 1994, vol. 14, 557
- **HEDLUND et al.** Progress in Zeolites and Microporous Materials. Elsevier, 1997, 2203